(19) Europäisches Patentamt
European Patent Office
Office européen des brevets

(11) **EP 0 748 590 B1**

(12) **FASCICULE DE BREVET EUROPEEN**

(45) Date de publication et mention
de la délivrance du brevet:
**17.12.2003 Bulletin 2003/51**

(51) Int Cl.⁷: $A23L\ 1/30$, $A61K\ 35/78$, $A61K\ 31/20$

(21) Numéro de dépôt: **95401393.4**

(22) Date de dépôt: **15.06.1995**

(54) **Nouveau complément nutritionnel à base d'oléagineux et procédé d'obtention**

Nahrungsmittelzusatz auf Basis von ölhaltigen Stoffen und Herstellungsverfahren

Oil-bearing product based food supplement and fabrication process

(84) Etats contractants désignés:
**AT BE CH DE DK ES FR GB GR IE IT LI LU NL PT SE**

(43) Date de publication de la demande:
**18.12.1996 Bulletin 1996/51**

(73) Titulaire: **INSTITUT DE RECHERCHE BIOLOGIQUE**
**F-78870 Bailly (FR)**

(72) Inventeur: **Ponroy, Yves**
**F-78000 Versailles (FR)**

(74) Mandataire: **Burtin, Jean-François**
**Cabinet GEFIB,**
**55, rue Aristide Briand**
**92300 Levallois-Perret Cedex (FR)**

(56) Documents cités:
**EP-A- 0 092 076          EP-A- 0 092 085**
**EP-A- 0 271 747          EP-A- 0 440 347**
**EP-A- 0 696 453          FR-A- 2 637 910**
**FR-A- 2 714 573          GB-A- 1 082 624**

- **THE AMERICAN JOURNAL OF CLINICAL NUTRITION, vol. 57, no. 5(S), Mai 1993 pages 703S-710S, M.A.CRAWFORD 'The role of essential fatty acids in neural development:implications for perinatal nutrition'**
- **EUROPEAN JOURNAL OF CLINICAL NUTRITION, vol. 46, Juin 1992 pages S51-S62, B.KOLETZKO 'Fats for brains'**

**Description**

La présente invention se rapporte au domaine de la diététique. Elle s'adresse en particulier au domaine de l'alimentation des femmes enceintes.

Elle a spécialement pour objet l'utilisation pour la préparation de compléments nutritionnels pour femmes enceintes caractérisés en ce qu'ils sont constitués par une source végétale d'acides gras di-, tri- ou tetra insaturés de la série n-6 et de la série n-3, additionnés ou mélangés à un ou plusieurs supports, solides ou liquides inertes, alimentaires, permettant l'administration sous une forme dosée.

De préférence, la source végétale d'acides gras di-, tri- ou tetra insaturés est constituée par une huile riche en de tels acides comme par exemple, une huile de pépins de l'espèce Ribes, comme l'huile de pépins de cassis, l'huile de pépins de groseilles ou l'huile de pépins de groseilles à maquereaux.

On peut utiliser également des concentrés de ces acides gras ainsi qu'il a été montré dans le brevet français 2.637.910, dans lequel on décrit l'épuisement des pépins de Ribes par fluide supercritique et séparation fractionnée des différentes fractions d'acides gras.

Les huiles de pépins de fruits du genre Ribes se différencient nettement d'autres huiles végétales comme l'huile d'onagre (Oenothera lamarckiana) ou de bourrache (Borrago sp.) qui contiennent peu d'acide $\alpha$-linolénique (18 n-3) très peu d'acide stéaridonique (18:4 n-3) et beaucoup d'acide $\gamma$-linolénique.

De même, on peut différencier, selon les mêmes critères, les huiles de pépins de Ribes, des autres huiles végétales (Colza, Noix, Soja, Lin) qui ne contiennent comme acides gras essentiels, que l'acide linoléique (18:2 n-6) et l'acide $\alpha$-linolénique (18:3 n-3).

C'est pourquoi les huiles de pépins de Ribes présentent le grand avantage de contenir, en plus des deux acides gras essentiels des séries n-6 et n-3 (linoléique et $\alpha$-linolénique), les deux acides gras homologues (acide $\gamma$-linolénique et l'acide stéaridonique), de sorte que la charge de la voie de la $\Delta$6-desaturase est allégée, alors que cette intervention est souvent un facteur limitant dans la synthèse des acides gras polyinsaturés à longue chaîne comme l'acide arachidonique (20:4 n-6) et l'acide docosahexaenoïque (DHA ou 22:6 n-3).

La présence d'une grande quantité d'acides gras polyinsaturés de la série n-3 (de 15 à 35%), confère donc aux huiles de pépins de Ribes des avantages diététiques que n'ont pas les autres huiles.

En effet, les besoins nutritionnels de la femme enceinte sont assez spécifiques puisqu'ils doivent, permettre un développement du foetus.

Ces apports ont été largement étudiés en termes de valeur calorique, d'apport en nutriments de base (lipides, protides, glucides), d'apport en sels minéraux et d'apport en oligo-éléments.

Des données plus récentes ont permis cependant de constater que jusqu'à présent, les besoins spécifiques en acides gras essentiels des très jeunes enfants étaient assez mal connus et cette méconnaissance était susceptible de conduire à des états de carence, chez les nouveau-nés.

On a pu mettre en évidence, en particulier, le fait que pour assurer le développement du cerveau, l'enfant a besoin d'un apport suffisant d'acide arachidonique ($C_{20}$:4 n-6) et d'acide docosahexaenoique (DHA $C_{22}$:6 n-3). Ces deux acides gras essentiels sont nécessaires pour le cerveau, c'est-à-dire qu'une carence engendre des lésions et des retards au niveau du développement des fonctions cognitives, de la vision et de l'audition (Crawford M. Am. J. Clin. Nutr. (1993) 57(suppl.) p.703-710; Kolezko B. Europ. J. Clin. Nutr. 46(suppl.1) p.51-52).

Afin d'assurer un apport suffisant en ces deux acides gras au niveau du placenta pour le foetus, la mère doit trouver, dans son alimentation, un apport correct et équilibré en leurs précurseurs métaboliques :

- acide linoléique
- acide $\gamma$-linolénique
- acide $\alpha$-linolénique
- acide stéaridonique

Or, cet apport, s'il est suffisant en qualité, est souvent déséquilibré par un excès d'acide linoléique ($C_{18}$:2 n-6) que l'on trouve en abondance dans les huiles végétales commerciales comme celles de maïs ou de tournesol. Cette consommation excessive d'un acide en $C_{18}$:2 n-6 peut conduire à inhiber, d'un facteur important (de l'ordre de 4), la transformation de cet acide en acides gras supérieurs. De même, en présence d'un tel excès, la transformation des acides en $C_{18}$:3 n-3 se trouve diminuée d'un facteur de 3 (Guesnet Ph. Cahier Nutr. Diet XXVIIII Vol. 1 (1993) p.19-25).

En conséquence, une consommation trop importante d'huile de tournesol ou d'huile de mais, peut conduire paradoxalement à une carence en acide arachidonique et en DHA chez le foetus et chez le nourrisson nourri au sein.

En outre, on a déterminé que c'était pendant les premières semaines du développement embryogénique, que les divisions des cellules nerveuses sont les plus intenses et que les besoins du cerveau du foetus sont les plus importants. Ceci plaide pour la dispensation à la femme enceinte de suppléments alimentaires dès le début de la gestation, et même dès qu'elle souhaite être mère.

Une étude récente, réalisée en FRANCE, a permis d'analyser le lait de 41 femmes réparties dans trois régions de FRANCE (Durand G, Europ. J. Clin. Nutr. Tome 47 (1993) p. 700-710). Il ressort de cette étude que le lait des femmes françaises est relativement pauvre en acides en $C_{18}$:3 n-6 (0,6% des acides gras) mais est relativement trop riche en acide $C_{18}$:2 n-6 (13%).

Le rapport

$$\frac{\text{acide } C_{18}\text{:2 n-6}}{\text{acide } C_{18}\text{:3 n-3}}$$

est de l'ordre de 20, c'est-à-dire parmi les plus élevés de l'EUROPE OCCIDENTALE.

De ce fait, l'apport d'un supplément nutritionnel en acides gras spécifiques à la femme enceinte paraît hautement souhaitable.

Parmi les huiles végétales actuellement disponibles sur le marché, il apparaît que les huiles obtenues à partir de pépins de fruits de Ribes ont une teneur intéressante en acides gras. Il s'agit, en particulier, de pépins de groseilles à maquereaux (Ribes uva crispa), de pépins de cassis (Ribes nigrum) et de pépins de groseilles (Ribes rubrum).

Les pépins de ces fruits contiennent environ 20% d'huile qui est riche (25%) en acides gras polyinsaturés des séries n-6 et n-3.

On préfère, en l'occurrence, l'huile de pépins de groseilles (Ribes rubrum), qui présente un meilleur rapport $\frac{\text{n -6}}{\text{n - 3}}$ voisin de 1,4 alors que ce rapport est de l'ordre de 4 pour l'huile de pépins de cassis (Ribes nigrum).

On peut cependant utiliser aussi un mélange de deux ou plusieurs huiles.

La présence simultanée des acides $\alpha$-linolénique et stéaridonique est primordiale puisque ce sont les précurseurs préférentiels de l'acide docosahexaenoïque qui est essentiel pour le développement du système nerveux central.

La présente invention concerne donc l'utilisation, pour la préparation d'un complément nutrionnel destiné aux femmes enceintes, des huiles de pépins de fruits du genre Ribes, afin de pallier les états de carence chez le foetus. Ces complements nutritionnels contenant une quantité efficace d'au moins une huile de pépins de Ribes peuvent se présenter, en mélange ou en addition, avec un support ou un véhicule inerte.

Dans ces compléments, les huiles de pépins de Ribes se trouvent dispersées ou incluses dans un support minéral ou organique inerte qui permet d'obtenir ces suppléments sous forme de poudres, de granulés ou de barres. On peut également disperser l'huile dans un véhicule aqueux sous forme d'émulsion huile dans l'eau ou eau dans l'huile par addition d'un agent tensioactif approprié. On peut ainsi former des laits aromatisés ou non, des micro-émulsions, des dispersions. On peut également formuler les huiles sous forme de liposomes en dissolvant l'huile dans un solvant organique non miscible à l'eau, additionné de lécithine ou de cholestérol puis en dispersant à l'eau.

On évapore le solvant pour obtenir une pellicule mince que l'on reprend par un milieu aqueux renfermant un agent tensioactif non ionique et on agite jusqu'à formation d'une émulsion homogène. Après réalisation d'une telle émulsion et vérification de sa stabilité, l'émulsion peut être diluée par une quantité supplémentaire d'eau.

Les formes pulvérulentes peuvent être aromatisées, édulcorées, additionnées d'un agent gélifiant et/ou d'un agent liant et/ou d'un agent diluant inerte pour réaliser une préparation parfaitement fluide.

Pour la stabilité de telles préparations, on peut y ajouter des agents stabilisants et notamment des agents antioxydants.

Les préparations ainsi réalisées peuvent, en outre, être additionnées de facteurs vitaminiques comme la vitamine E, l'acide folique, la vitamine B12 et/ou de sels minéraux comme le fer pour suppléer à certaines carences spécifiques de la femme enceinte.

Pour la commodité de l'ingestion, les préparations pulvérulentes sont conditionnées en capsules de gélatine renfermant de 200 à 600 mg d'huile de pépins de fruits de Ribes, diluée dans un excipient ou un diluant inerte alimentaire.

Les exemples suivants illustrent l'invention sans toutefois la limiter :

| EXEMPLE I | |
|---|---|
| . Huile de pépins de groseilles | 250 g |
| . $\alpha$-tocopherol | 0,5 g |
| . Bentonite | 6 g |
| . Carbonate de calcium | 12 g |
| . Phosphate tricalcique | 12 g |
| . Cellulose microcristalline | 18 g |

(suite)

| EXEMPLE I | |
|---|---|
| .Talc | 1,5 g |
| pour 1000 gélules d'un poids moyen de 0,300 g | |

| EXEMPLE II | |
|---|---|
| . Huile de pépins de groseilles | 400 g |
| . Autolysat de levure de bière | 6 g |
| . Silice colloïdale commercialisée sous la marque Aerosil 200 | 25 g |
| α-tocopherol | 0,75 g |
| . Carbonate de calcium | 5 g |
| . Gluconate ferreux | 8,25 g |
| . Carbomère vendu sous la marque Carbopol 934 | 4 g |
| . Eau | 60 g |
| pour 1000 capsules molles d'un poids moyen de 0,500 g | |

| EXEMPLE III | |
|---|---|
| . Huile de pépins de cassis | 40 g |
| . Copolymère d'oxyde d'éthylène et d'oxyde de propylène commercialisé sous la marque Pluronic F18 | 20 g |
| . Autolysat de levure de bière | 6 g |
| . Palmitate d'ascorbyle | 0,5 g |
| . Carbonate de calcium | |
| . Gluconate ferreux | 4,5 g |
| . Gluconate de manganèse | 2,5 g |
| . Gluconate de cobalt | 2,5 g |
| . Stearate de polyethylèneglycol | 5 g |
| . Eau purifiée qsp 1000 ml d'émulsion | |
| 10 ml d'émulsion correspondent à 0,400 g d'huile de pépins de cassis | |

| EXEMPLE IV | |
|---|---|
| . Huile de pépins de groseilles (ou à défaut huile de pépins de cassis) | 50 g |
| . Acide folique | 0,5 g |
| . Vitamine B12 | 0,06 g |
| . Ascorbate ferreux | 1,50 g |
| . Vitamine E | 0,25 g |
| . Stéarate de polyéthylène glycol | 5 g |
| . Eau purifiée qsp | 1000 ml |
| 1 ml d'émulsion correspond à 0,050 g d'huile de pépins de groseilles (ou à défaut de pépins de cassis). | |

**Revendications**

1. Utilisation des huiles de pépins de fruits du genre Ribes pour la préparation d'un complément nutritionnel destiné aux femmes enceintes afin de pallier les états de carence chez le foetus.

2. Utilisation selon la revendication 1° dans laquelle au moins une huile de pépins de Ribes se trouve additionnée ou dispersée dans des diluants ou des véhicules.

3. Utilisation selon la revendication 1 ou 2° dans laquelle au moins une huile de pépins de Ribes est diluée par un support minéral inerte pour former une préparation solide.

4. Utilisation selon la revendication 1 ou 2° dans laquelle au moins une huile de pépins de Ribes est dispersée dans un véhicule aqueux, additionnée d'un agent tensioactif pour former une émulsion huile dans l'eau ou eau dans l'huile.

5. Utilisation selon la revendication 1 ou 2° dans laquelle au moins une huile de pépins de Ribes est formulée sous forme de liposomes après dissolution dans un solvant organique additionné de cholestérol ou de lécitine, évaporation du solvant et reprise par un véhicule aqueux.

6. Utilisation selon l'une des revendications 1 à 5° dans laquelle les huiles de pépins de Ribes sont choisies dans le groupe formé de l'huile de pépins de groseilles à maquereaux, l'huile de pépins de cassis et l'huile de pépins de groseilles.

7. Utilisation selon la revendication 6° dans laquelle on emploie une fraction ou un concentrat d'une de ces huiles enrichie en acides gras polyinsaturés présentant un rapport $\frac{n-6}{n-3}$ amélioré, compris entre 1,4 et 4.

8. Utilisation selon l'une des revendications 1 à 7° dans laquelle les diluants ou véhicules sont additionnés d'un agent gélifiant et/ou d'un agent liant et/ou d'un agent diluant inerte.

9. Utilisation selon l'une des revendications 1 à 8° dans laquelle les compositions sont additionnées d'un agent stabilisant et notamment d'un agent antioxydant.

10. Utilisation selon l'une des revendications 1 à 9° dans laquelle les préparations sont additionnées de facteurs vitaminiques et/ou de sels minéraux.

11. Utilisation selon l'une des revendications 1 à 10° dans laquelle les préparations à base d'huile de pépins de fruits du genre Ribes renferment de 200 à 600 mg d'huile de pépins dilués dans un support ou un véhicule, par prise unitaire.

**Claims**

1. Use of oils of seeds of the limits of the limit of the genus rides in view of the preparation of nutritive complement intended for pregnant women in order to compensate the carence stats in the foetus.

2. Use according to claim 1 wherein at least one oil of seeds of Rides is admixed or dispensed in diluent or vehicles.

3. Use according to claim 1 or 2 wherein al least one oil of the seeds of Rides is diluted with an inert mineral carrier to form a solid preparation.

4. Use according to claim 1 or 2 wherein at least on oil of the seeds of Ribes is dispersed in an aqueous vehicle, added to a tenside to form a W/O or W/O emulsion.

5. Use according to claim 1 or 2, wherein at least one oil of seeds of Ribes is formulated in the form of liposomes after dissolution in an organic solvent to which cholesterol or lecithine is added, evaporation of the solvent and mistake with an aqueous vehicle.

6. Use according to one of claims 1 to 5, wherein the oils of seeds of Ribes are selected form the group formed with the Oil of seeds of goosberry, oil of seeds of black current and oil of seed of red current.

7. Use according to claim 6, wherein a fraction or a concentiates of one of these oils enriched with polyunsaturated fatty acids, showing improved ratio $\frac{n-6}{n-3}$, comprised between 1,4, is used

8. Use according to one of the claims 1 to 7 wherein the diluents or vehicles are added to a gellifying agent and/or a binding agent and/or an inert diluting agent.

**9.** Use according to one of claims 1 to 8 wherein the composition are added to a stabilizing agent and namely to an antioxydizing agent.

**10.** Use according to one of claims 1 to 9, wherein the preparations are added to vitaminic factors and/or mineral salts.

**11.** Use according to one of claims 1 to 10, wherein the preparations based on oil of seeds of limits of the germs Ribes contain from 200 to 600 mg of oil of seeds diluted in a carrier or a vehicle, per unit dosage.

**Patentansprüche**

**1.** Verwendung von Kernölen von Früchten aus der Familie der Stachelbeergewächse zur Herstellung einer Nahrungsmittelergänzung, die für schwangere Frauen bestimmt ist, um Mangelzustände beim Fötus zu lindern.

**2.** Verwendung gemäß Anspruch 1, bei der wenigstens ein Kernöl eines Stachelbeergewächses Verdünnungsmitteln Oder Aufnahmeflüssigkeiten zugegeben Oder darin verteilt wird.

**3.** Verwendung nach einem der Ansprüche 1 Oder 2, bei der wenigstens ein Kernöl eines Stachelbeergewächses mit einem mineralischen inerten Basisstoff verdünnt wird, um eine Festphase herzustellen.

**4.** Verwendung nach einem der Ansprüche 1 Oder 2, bei der wenigstens ein Kernöl eines Stachelbeergewächses in einer wässrigen Aufnahmeflüssigkeit verteilt wird, der ein grenzflächenaktiver Stoff zugegeben ist, um eine Emulsion von Öl in Wasser oder Wasser in Öl zu bilden.

**5.** Verwendung nach einem der Ansprüche 1 Oder 2, bei der wenigstens ein Kernöl eines Stachelbeergewächses nach Aufschluss in einem organischen Lösungsmittel, dem Cholesterin oder Lecithin zugefügt ist, Verdampfung des Lösungsmittels und Rückgewinnung in einer wässrigen Aufnahmeflüssigkeit in der Form von Liposomen aufbereitet wird.

**6.** Verwendung nach einem der Ansprüche 1 bis 5, bei der die Kernöle der Stachelbeergewächse aus der, vom Kernöl von Stachelbeeren, vom Kernöl schwarzer Johannisbeeren und vom Kernöl von Johannisbeeren gebildeten Gruppe, ausgesucht sind.

**7.** Verwendung nach Anspruch 6, bei der eine Fraktion oder ein Konzentrat eines dieser mit mehrfach ungesättigten Fettsäuren angereicherten Ölen angewandt wird, die ein verbessertes Verhältnis $\frac{n\text{-}6}{n\text{-}3}$ aus dem Bereich 1,4 bis 4 aufweisen.

**8.** Verwendung nach einem der Ansprüche 1 bis 7, bei der den Verdünnungsmitteln oder Aufnahmeflüssigkeiten ein Gelierstoff und/oder ein Bindemittel und/oder ein inerter Füllstoff zugefügt ist.

**9.** Verwendung nach einem der Ansprüche 1 bis 8, bei der den Zusammensetzungen ein Stabilisator and insbesondere ein Antioxidationsmittel zugefügt sind.

**10.** Verwendung nach einem der Ansprüche 1 bis 9, bei der den Präparaten Vitaminzusätze und/oder Mineralsalze hinzugefügt sind.

**11.** Verwendung nach einem der Ansprüche 1 bis 10, bei der die Präparate auf der Basis von Kernölen der Früchte aus der Familie der Stachelbeergewächse zwischen 200 bis 600 mg verdünntes Kernöl in einem Basisstoff oder einer Aufnahmeflüssigkeit pro Einheitsdosis enthalten.